(19) Europäisches Patentamt
European Patent Office
Office européen des brevets

(11) **EP 1 934 665 B1**

(12) **EUROPÄISCHE PATENTSCHRIFT**

(45) Veröffentlichungstag und Bekanntmachung des Hinweises auf die Patenterteilung:
**17.06.2015 Patentblatt 2015/25**

(21) Anmeldenummer: **06806774.3**

(22) Anmeldetag: **18.09.2006**

(51) Int Cl.:
***G05D 23/19*** *(2006.01)*

(86) Internationale Anmeldenummer:
**PCT/EP2006/066445**

(87) Internationale Veröffentlichungsnummer:
**WO 2007/042371 (19.04.2007 Gazette 2007/16)**

(54) **VORRICHTUNG ZUR STEUERUNG EINER RAUMTEMPERATUR IN EINEM GEBÄUDE UNTER VERWENDUNG EINER PRÄDIKTIVEN STEUEREINRICHTUNG**

DEVICE FOR CONTROLLING THE ROOM TEMPERATURE IN A BUILDING USING A PREDICTIVE CONTROL DEVICE

DISPOSITIF POUR ASSURER LA COMMANDE D'UNE TEMPERATURE AMBIANTE DANS UN BATIMENT, AU MOYEN D'UN DISPOSITIF DE COMMANDE A PREDICTION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **14.10.2005 US 726133 P**

(43) Veröffentlichungstag der Anmeldung:
**25.06.2008 Patentblatt 2008/26**

(73) Patentinhaber: **Siemens Schweiz AG**
**8047 Zürich (CH)**

(72) Erfinder:
• **GWERDER, Markus**
**CH-6312 Steinhausen (CH)**
• **TOEDLI, Jürg**
**CH-8049 Zürich (CH)**

(74) Vertreter: **Maier, Daniel Oliver et al**
**Siemens AG**
**Postfach 22 16 34**
**80506 München (DE)**

(56) Entgegenhaltungen:
WO-A-2004/025189        US-A- 4 231 352
US-A- 4 897 798          US-A1- 2002 109 011
US-A1- 2004 182 943

**Beschreibung**

Technisches Gebiet

Die Erfindung bezieht sich auf eine Anordnung zur Steuerung und Regelung einer Raumtemperatur in einem Gebäude. Solche Anordnungen eignen sich beispielsweise zum Heizen und Kühlen von Räumen oder Raumzonen in Gebäuden und sind beispielsweise Teil eines Gebäudeautomationssystems.

Stand der Technik

Regelanordnungen, durch welche eine Raumtemperatur auf einen vorgegebenen Sollwert regelbar ist, sind allgemein bekannt. Bekannte Regelanordnungen umfassen beispielsweise einen sogenannten PID-Regler sowie, auf Heizwasser- oder Kühlwasserkreise wirkende Stellglieder.

In WO 94/27202 wird zur Minimierung der Energiekosten vorgeschlagen, eine Elektroheizung aufgrund empfangener Tarif- und Wettervorhersageinformation zu steuern.

Aus EP1 074 900A ist eine prädiktive Einrichtung zum Regeln oder Steuern von Versorgungsgrössen bekannt.

Aufgabenstellung

Der Erfindung liegt die Aufgabe zugrunde, eine Anordnung vorzuschlagen, durch welche eine wählbare Behaglichkeit erreichbar ist und durch welche kostengünstige Heiz- und Kühlenergie optimal einsetzbar ist, so dass Energiekosten reduzierbar sind.

Die genannte Aufgabe wird erfindungsgemäss durch die Merkmale des Anspruchs 1 gelöst. Vorteilhafte Ausgestaltungen ergeben sich aus den abhängigen Ansprüchen.

Darstellung der Erfindung

Nachfolgend werden Ausführungsbeispiele der Erfindung anhand der Zeichnung näher erläutert.

Es zeigen:

Fig. 1 eine erfindungsgemässe Anordnung zur Steuerung und Regelung einer Raumtemperatur in einem Gebäude,
Fig. 2 ein in der Anordnung einsetzbares Raummodell, und
Fig. 3 Diagramme zum Vergleich von Regelstrategien.

Ein hier beispielhaft betrachtetes Gebäude wird thermisch primär durch kaltes und heißes Wasser konditioniert, d.h. über Kühldecken für die Kühlung und über Heizkörper für die Heizung. Das kalte Wasser für die Kühlung kann entweder über den Betrieb eines Kühlaggregats - und damit mit hohen Kosten - oder über freie Kühlung durch den Betrieb lediglich eines Nasskühlturms - und damit mit niedrigen Energiekosten - produziert werden. Das heiße Wasser für die Heizung wird durch den Betrieb eines Warmwasserbereiters - und damit mit hohen Energiekosten - produziert. Außerdem können zur Regelung der thermischen Behaglichkeit in dem Gebäude Sonnenschutzvorrichtungen eingesetzt werden, was niedrige Energiekosten verursacht. Die Raumtemperatur kann innerhalb des Behaglichkeitsbereichs für die Raumtemperatur schwanken, beispielsweise im Bereich von 21°C bis 26°C.

In einem System mit - wie im hier betrachteten Beispiel - passiven Wärmespeichern, ist ein definierter, nicht null betragender Behaglichkeitsbereich Grundvoraussetzung dafür, dass das System überhaupt von einer prädiktiven Regelung profitieren kann. Je größer der Behaglichkeitsbereich ausgelegt ist, desto energie- und kosteneffizienter kann die prädiktive Regelung sein, da es dann auch einen größeren Bereich gibt, in dem die Wärmekapazität des Gebäudes genutzt werden kann. Wenn beispielsweise ein Behaglichkeitsbereich für die Temperatur mit einer Breite von 5 K gegeben ist, beträgt die maximale Wärmedifferenz, die in einer typischen Betondecke gespeichert ist, bereits mehr als 1 kWh/m$^2$. Außer der Wärmekapazität der Decken sind in Gebäuden weitere Kapazitäten der Gebäudemasse, so beispielsweise Wärmekapazitäten der inneren und äußeren Wände und der Möbel wirksam.

Wenn kostenintensive Heiz- und Kühlsysteme schnell und gut dimensioniert sind, wenn also die Raumtemperatur innerhalb des Behaglichkeitsbereichs ohne deutliche Zeitverzögerung geregelt werden kann, gibt es keinerlei Risiko, dass die Behaglichkeitsansprüche nicht erfüllt werden könnten. Falsche Vorhersagen auf der Grundlage von Modellfehlern oder falsch abgeschätzte Störungen führen daher - temporär - zu erhöhten Anforderungen an Energie und/oder Kosten, nicht aber zu einem Behaglichkeitsverlust. Aus diesem Grund ist dieser Typ von prädiktiver Regelung besonders geeignet für die - auch prototypische - Anwendung in echten Gebäuden, da hier im Hinblick auf die Behaglichkeit für die Benutzer des Gebäudes keine Abstriche gemacht werden müssen.

Bei konventionellen Regelstrategien für integrierte Raumautomation ist die Sonnenschutzregelung unabhängig von der Heizungs-, Lüftungs- und Klima-Regelung. Die sogenannte integrierte Raumautomation behandelt Heizung, Lüftung, Kühlung, Beleuchtung und Sonnenschutz in Räumen oder Raumzonen. Ausgeklügeltere Sonnenschutzregeleinrichtungen berücksichtigen beispielsweise auch die Regelaufgabe für die künstliche Beleuchtung, gewisse Regeleinrichtungen treffen beispielsweise zusätzliche Entscheidungen in Abhängigkeit von den aktuellen Heiz- oder Kühlbelastungen.

Das erfindungsgemässe Regelkonzept hat eine hierarchische Struktur mit typischerweise einem Regler auf der obersten Ebene und typischerweise mehreren Reglern auf niedrigeren Ebenen. Die Regelung auf der obersten Ebene erfolgt über eine modellprädiktive Regelung, wobei freie oder kostengünstige Energiequellen, wie beispielsweise solare Energiegewinne über Sonnenschutz oder freie Kühlung über Trocken- oder Nasskühltürme auf der obersten Ebene geregelt werden. Die Regelung auf den niedrigeren Ebenen erfolgt bei der Regelung einer einzelnen Zone über die verbleibenden - üblicherweise kostenintensiven - Energiequellen. Mit Zone wird hier allgemein ein Raum eines Gebäudes oder eines Gebäudekomplexes bezeichnet, unabhängig davon ob er als Einzelraum durch Decke, Boden und Wände vollständig abgeschlossen ist, oder ob es sich um mehrere, bezüglich Energieverhalten gleichartige Räume oder Raumzonen handelt. In diesem Sinn wird beispielsweise auch ein gedeckter Hof oder ein Atrium als Zone bezeichnet.

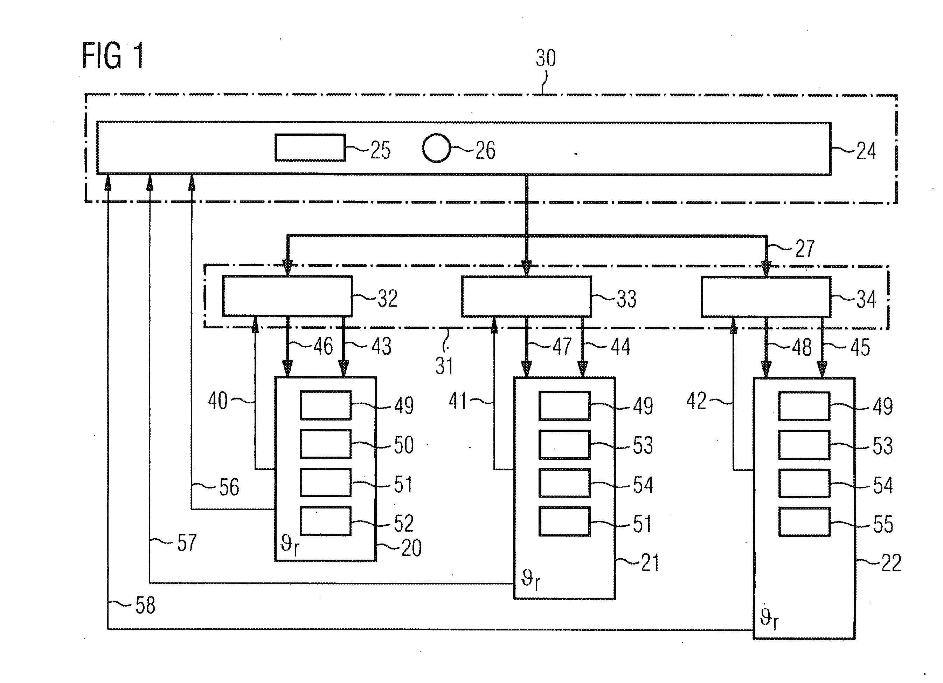

Ein in der Fig. 1 nicht vollständig dargestelltes Gebäude weist eine erste Zone 20, eine zweite Zone 21 und eine dritte Zone 22 auf. Die drei Zonen weisen Geräte zum Heizen und Kühlen auf, durch welche die Raumtemperatur $\vartheta_r$ in den Zonen veränderbar ist, wobei in einer Zone in der Regel einerseits Geräte zur Steuerung des Energieflusses von kostengünstigen, also sogenannten freien Energiequellen und andrerseits Geräte zur Steuerung des Energieflusses von teuren Energiequellen vorhanden sind.

Freie Energiequellen sind beispielsweise die Sonneneinstrahlung, Abwärme, Aussenluft und allgemein passive Wärme- bzw. Kältespeicher. Teure Energiequellen sind beispielsweise mit Ölbrenner oder Elektrizität betriebene Warmwasserheizungen. Wie der Preis eines Energieträgers in der Regel zeitabhängig ist, kann eine Unterscheidung zwischen freier und teurer Energie auch zeitabhängig sein, so kann beispielsweise Fluss oder Seewasser in vielen Fällen eine freie Energiequelle sein, in Trockenzeiten jedoch teuer werden.

Mit 24 ist eine prädiktive Steuereinrichtung zur optimalen Steuerung der Verwendung wenigstens einer kostengünstigen Energiequelle bezeichnet. Die prädiktive Steuereinrichtung 24 verfügt über ein Gebäudemodell 25 und wenigstens einen Mikrocomputer 26 zur wiederholbaren Optimierung des zur Heizung oder Kühlung der Zonen 20, 21 und 22 erforderlichen Energieverbrauchs. Durch die prädiktive Steuereinrichtung 24 ist mindestens ein erstes Steuersignal 27 zur optimalen Steuerung der Verwendung einer freien Energiequelle generierbar.

Eine Anordnung zur Regelung der Raumtemperatur $\vartheta_r$, hat vorteilhafterweise eine hierarchische Struktur mit einer oberen Ebene 30 und wenigstens einer, der oberen Ebene 30 untergeordneten, unteren Ebene 31. Die obere Ebene 30 wird durch die prädiktive Steuereinrichtung 24 gebildet. Grundsätzlich kann die obere Ebene 30 mehrere gleichartige Exemplare der prädiktiven Steuereinrichtung 24 aufweisen.

Die untere Ebene 31 umfasst im Beispiel ein erstes, der ersten Zone 20 zugeordnetes Regelgerät 32, eine zweites, der zweiten Zone 21 zugeordnetes Regelgerät 33 und ein drittes, der dritten Zone zugeordnetes Regelgerät 34. Grundsätzlich umfasst die untergeordnete Ebene 31 wenigstens ein Regelgerät, allgemein sind jedoch mehrere untergeordnete Regelgeräte vorhanden.

Vorteilhafterweise wird den Regelgeräten 32, 33 und 34 der untergeordneten Ebene 31 eine jeweils in der entsprechenden Zone 20, 21 oder 22 erfasste Messgrösse als Rückführungssignal 40, 41 bzw. 42 zugeführt.

In einer vorteilhaften Ausführung der Anordnung wird das von der prädiktiven Steuereinrichtung 24 generierte erste Steuersignal 27 als Eingangsgrösse den Regelgeräten 32, 33 und 34 der unteren Ebene 31 zugeführt.

Die Regelgeräte 32, 33, 34 generieren je wenigstens ein zweites Steuersignal 43, 44 bzw. 45 zur Steuerung der Verwendung einer freien Energiequelle. Bei Bedarf generieren die Regelgeräte 32, 33, 34 ausserdem ein drittes Steuersignal 46, 47 bzw. 48 zur Steuerung der Verwendung einer teueren Energiequelle.

Die zweiten Steuersignale 43, 44 und 45 und die dritten Steuersignale 46, 47 und 48 enthalten vorteilhafterweise Stellinformation zur Steuerung der in zugeordneten Zone 20, 21 bzw. 22 angeordneten Geräten zur Steuerung des Energieflusses von freien - beziehungsweise teueren Energiequellen. Zur Steuerung von freien Energiequellen verfügt die beispielhafte Anordnung über in allen Zonen 20, 21 und 22 angeordnete Sonnenschutzgeräte 49, ein der ersten Zone 20 zugeordneter Kühlturm 50 und in der ersten Zone 20 und in der zweiten Zone 21 angeordnete Lüftungsklappen 51 oder 52. Zur Steuerung von teuren Energiequellen sind in der zweiten Zone 21 und auch in der dritten Zone 22 Heizwasserventile 53 und Kühlwasserventile 54 angeordnet. Ausserdem ist der dritten Zone 22 eine Energierückgewinnungseinrichtung 55 zugeordnet.

Vorteilhafterweise wird je eine, jeweils in der entsprechenden Zone 20, 21 oder 22 erfasste Messgrösse 56, 57 bzw. 58 an die prädiktiven Steuereinrichtung 24 zurückgeführt.

Die in der unteren Ebene 31 angeordneten Regelgeräte 32, 33 und 34 sind beispielsweise durch marktübliche, für Raumklimaanwendungen ausgelegte PID-Regler implementiert.

Im aktuellen Beispiel wird nur die Regelung auf der obersten Ebene näher betrachtet, die Regelung auf den niedrigeren Ebenen wird als ideal vorausgesetzt.

Das grundlegende von einem Regler auf der obersten Ebene verwendete Gebäudemodell 25 ist typischerweise ein einfaches Modell, das die wesentlichen statischen und dynamischen Wärmeeigenschaften des Gebäudes widerspiegelt. Ein Beispiel für ein solches Gebäudemodell wird im Folgenden eingeführt. Dasselbe Gebäudemodell wird hier auch zugrunde gelegt, um damit das Potenzial der prädiktiven Regelung für integrierte Raumautomation aufzuzeigen.

Gebäudemodell

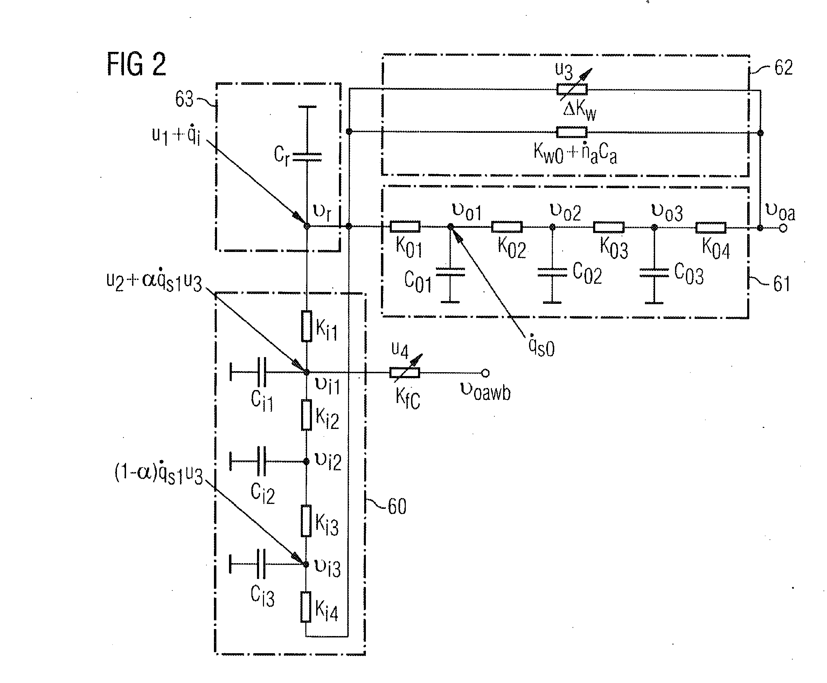

Eine schematische Darstellung des beispielhaften Gebäudemodells zeigt Fig. 2. Das Gebäudemodell umfasst im wesentlichen einen ersten Modellteil 60 zur Modellierung des Gebäudekerns, einen zweiten Modellteil 61 zur Modellierung der Gebäudehülle, einen dritten Modellteil 62 zur Modellierung von Fenstern und den zentralen Raumknoten 63 mit Raumtemperatur $\vartheta_r$, der wichtigsten Ausgabegrösse des Gebäudemodells. Die Eingangsgrößen für das Gebäudemodell werden aufgeteilt in Stell- und Störgrößen. Die Stellgrößen sind hier die Heizleistung $u_1$, die Kühlleistung $u_2$, die Sonnenschutzposition $u_3$ und die normalisierte freie Kühlleistung $u_4$. Freie Kühlleistung bedeutet in diesem Zusammenhang, dass zur Kühlung ein im wesentlichen kostenloser Energieträger nutzbar ist, also beispielsweise kühle Aussenluft oder kühles Seewasser. Bei der Sonnenschutzposition $u_3$ beispielsweise bedeutet der Wert null geschlossen und eins offen. Für die freie Kühlleistung $u_4$ bedeutet der Wert null keine freie Kühlung und der Wert eins maximale Kühlung. Im Rahmen diese Beispiels wird angenommen, dass die kostenintensiven Kühlungs- und Heizungsquellen keine Begrenzungen bei der Leistungsabgabe haben.

Beschränkungen für die Stellgrößen sind in Ungleichungen G1 und G2 angegeben.

$$0 \le u_1(t) \qquad 0 \le u_3(t) \le 1 \qquad\qquad (G1)$$

$$0 \le u_2(t) \qquad 0 \le u_4(t) \le 1 \qquad\qquad (G2)$$

Störgrößen sind die Außenlufttemperatur $\vartheta_{on}$, die Aussenluftfeuchtkugeltemperatur $\vartheta_{oawb}$, die solaren Energiegewinne bei vollständig geschlossenem Sonnenschutz $\dot{q}_{s0}$, also die sekundäre Wärmeübertragung, die zusätzlichen solaren Energiegewinne für vollständig geöffneten Sonnenschutz $\dot{q}_{s1}$, also die Strahlung, sowie die internen Wärmegewinne $\dot{q}_i$.

Im beispielhaften Gebäudemodell werden der Wärmefluss durch die Außenwände und Fenster sowie der Wärmefluss in die innen gelegenen Teile des Gebäudes bzw. aus diesen heraus modelliert. Die Heizleistung $u_1$ und die internen Wärmegewinne $\dot{q}_i$ wirken direkt auf den gemeinsamen Raum-Wärmeknoten, der mit der erfassbaren Raumtemperatur $\vartheta_r$ verknüpft ist. Die Kühlleistung $u_2$ und die freie Kühlung $u_4$ wirken auf den Wärmeknoten an der Decke oder Kühldecke, wohingegen die Sonneneinstrahlung $\dot{g}_{s1}$ sowohl auf die Wärmeknoten auf dem Boden als auch auf die an der Decke wirkt. Die sekundären solaren Wärmegewinne $\dot{q}_{s0}$ wirken auf die Innenseite der äußeren Hülle. Die Wärmeübertragungskoeffizienten für das Fenster und für das freie Kühlungssystem ändern sich im Zusammenhang mit der Sonnenschutzposition $u_3$ bzw. der freien Kühlungsaktivitäten $u_4$. Zur Darstellung des dynamischen Verhaltens eines echten Gebäudes werden die Wärmekapazitäten einem konzentrierten Raum-Wärmeknoten $C_r$, einer äußeren Hülle $C_{o1}$, $C_{o2}$, $C_{o3}$ sowie innen gelegenen Teilen $C_{i1}$, $C_{i2}$, $C_{i3}$ des Gebäudes zugeordnet. Im Modell haben Die Fenster keine Wärmekapazität. Das Gebäudemodell kann geschrieben werden als Darstellung eines pseudo-linearen Zustandsraums gemäss Gleichungen G3, wobei der Zustandsvektor $\underline{x}$ durch Gleichung G4, der Störgrößenvektor $\underline{v}$ durch Gleichung G5 und die Zustandsraummatrizen durch Gleichungen G6 bis G9 gegeben sind. Im Gebäudemodell sind Wärmeübertragungskoeffizienten mit K und ein Luftwechselverhältnis mit $\dot{n}_a$ bezeichnet.

$$\dot{\underline{x}}(t) = A\underline{x}(t) + B_u\underline{u}(t) + B_v\underline{v}(t) + \underbrace{\sum_{i=1}^{4}\left[\left(B_{vu,i}\underline{v}(t) + B_{xu,i}\underline{x}(t)\right)u_i(t)\right]}_{B_u^*(\underline{x}(t),\underline{v}(t))\,\underline{u}(t)} \qquad (G3)$$

$$y(t) = C\underline{x}(t)$$

$$\underline{x}^T(t) = \begin{bmatrix} \vartheta_r(t) & \vartheta_{i1}(t) & \vartheta_{i2}(t) & \vartheta_{i3}(t) & \vartheta_{o1}(t) & \vartheta_{o2}(t) & \vartheta_{o3}(t) \end{bmatrix} \qquad (G4)$$

$$\underline{v}^T(t) = \begin{bmatrix} \vartheta_{oa}(t) & \vartheta_{oawb}(t) & \dot{q}_{s0}(t) & \dot{q}_{s1}(t) & \dot{q}_i(t) \end{bmatrix} \tag{G5}$$

$$A = \begin{bmatrix}
\dfrac{\dot{n}_a C_a + K_{w0} + K_{i1} + K_{o1} + K_{i4}}{C_r} & \dfrac{K_{i1}}{C_r} & 0 & \dfrac{K_{i4}}{C_r} & \dfrac{K_{o1}}{C_r} & 0 & 0 \\[2mm]
\dfrac{K_{i1}}{C_{i1}} & \dfrac{K_{i1}+K_{i2}}{C_{i1}} & \dfrac{K_{i2}}{C_{i1}} & 0 & 0 & 0 & 0 \\[2mm]
0 & \dfrac{K_{i2}}{C_{i2}} & \dfrac{K_{i2}+K_{i3}}{C_{i2}} & \dfrac{K_{i3}}{C_{i2}} & 0 & 0 & 0 \\[2mm]
\dfrac{K_{i4}}{C_{i3}} & 0 & \dfrac{K_{i3}}{C_{i3}} & \dfrac{K_{i3}+K_{i4}}{C_{i3}} & 0 & 0 & 0 \\[2mm]
\dfrac{K_{o1}}{C_{o1}} & 0 & 0 & 0 & \dfrac{K_{o1}+K_{o2}}{C_{o1}} & \dfrac{K_{o2}}{C_{o1}} & 0 \\[2mm]
0 & 0 & 0 & 0 & \dfrac{K_{o2}}{C_{o2}} & \dfrac{K_{o2}+K_{o3}}{C_{o2}} & \dfrac{K_{o3}}{C_{o2}} \\[2mm]
0 & 0 & 0 & 0 & 0 & \dfrac{K_{o3}}{C_{o3}} & \dfrac{K_{o3}+K_{o4}}{C_{o3}}
\end{bmatrix} \tag{G6}$$

$$B_u = \begin{bmatrix}
\frac{1}{C_r} & 0 & 0 & 0 \\
0 & \frac{1}{C_{i1}} & 0 & 0 \\
0 & 0 & 0 & 0 \\
0 & 0 & 0 & 0 \\
0 & 0 & 0 & 0 \\
0 & 0 & 0 & 0 \\
0 & 0 & 0 & 0
\end{bmatrix}
\qquad
B_v = \begin{bmatrix}
\frac{\dot{n}_a C_a + K_{w0}}{C_r} & 0 & 0 & 0 & \frac{1}{C_r} \\
0 & 0 & 0 & 0 & 0 \\
0 & 0 & 0 & 0 & 0 \\
0 & 0 & 0 & 0 & 0 \\
0 & 0 & \frac{1}{C_{o1}} & 0 & 0 \\
0 & 0 & 0 & 0 & 0 \\
\frac{K_{o4}}{C_{o3}} & 0 & 0 & 0 & 0
\end{bmatrix}
\qquad
B_{vu,1} = B_{vu,2} = \begin{bmatrix}
0 & 0 & 0 & 0 & 0 \\
0 & 0 & 0 & 0 & 0 \\
0 & 0 & 0 & 0 & 0 \\
0 & 0 & 0 & 0 & 0 \\
0 & 0 & 0 & 0 & 0 \\
0 & 0 & 0 & 0 & 0 \\
0 & 0 & 0 & 0 & 0
\end{bmatrix}$$

$$B_{vu,3} = \begin{bmatrix}
\frac{\Delta K_w}{C_r} & 0 & 0 & 0 & 0 \\
0 & 0 & 0 & \frac{\alpha}{C_{i1}} & 0 \\
0 & 0 & 0 & 0 & 0 \\
0 & 0 & 0 & \frac{1-\alpha}{C_{i3}} & 0 \\
0 & 0 & 0 & 0 & 0 \\
0 & 0 & 0 & 0 & 0 \\
0 & 0 & 0 & 0 & 0
\end{bmatrix} \tag{G7}$$

$$B_{xu,4} = \begin{bmatrix} 0 & 0 & 0 & 0 & 0 \\ 0 & \dfrac{K_{fe}}{C_{il}} & 0 & 0 & 0 \\ 0 & 0 & 0 & 0 & 0 \\ 0 & 0 & 0 & 0 & 0 \\ 0 & 0 & 0 & 0 & 0 \\ 0 & 0 & 0 & 0 & 0 \\ 0 & 0 & 0 & 0 & 0 \end{bmatrix} \quad B_{xu,1} = B_{xu,2} = \begin{bmatrix} 0 & 0 & 0 & 0 & 0 & 0 & 0 \\ 0 & 0 & 0 & 0 & 0 & 0 & 0 \\ 0 & 0 & 0 & 0 & 0 & 0 & 0 \\ 0 & 0 & 0 & 0 & 0 & 0 & 0 \\ 0 & 0 & 0 & 0 & 0 & 0 & 0 \\ 0 & 0 & 0 & 0 & 0 & 0 & 0 \\ 0 & 0 & 0 & 0 & 0 & 0 & 0 \end{bmatrix} \quad B_{xu,3} = \begin{bmatrix} \dfrac{\Delta K_{sr}}{C_r} & 0 & 0 & 0 & 0 & 0 & 0 \\ 0 & 0 & 0 & 0 & 0 & 0 & 0 \\ 0 & 0 & 0 & 0 & 0 & 0 & 0 \\ 0 & 0 & 0 & 0 & 0 & 0 & 0 \\ 0 & 0 & 0 & 0 & 0 & 0 & 0 \\ 0 & 0 & 0 & 0 & 0 & 0 & 0 \\ 0 & 0 & 0 & 0 & 0 & 0 & 0 \end{bmatrix}$$

$$B_{xu,4} = \begin{bmatrix} 0 & 0 & 0 & 0 & 0 & 0 \\ 0 & \dfrac{K_{fe}}{C_{il}} & 0 & 0 & 0 & 0 \\ 0 & 0 & 0 & 0 & 0 & 0 \\ 0 & 0 & 0 & 0 & 0 & 0 \\ 0 & 0 & 0 & 0 & 0 & 0 \\ 0 & 0 & 0 & 0 & 0 & 0 \\ 0 & 0 & 0 & 0 & 0 & 0 \end{bmatrix}$$

(G8)

$$C = \begin{bmatrix} 1 & 0 & 0 & 0 & 0 & 0 & 0 \end{bmatrix} \tag{G9}$$

Das Regelungsoptimierungsproblem

Mit Vorteil wird eine lineare Programmierung verwendet, um die Lösung des Regelungsoptimierungsproblems anhand der Minimierung einer in Gleichung G10 dargestellten Kostenfunktion J zu bestimmen.

$$J(u) = \sum_{i=0}^{n-1} \left( (t_{i+1} - t_i) \underline{w}^T(t_i) \underline{u}(t_i) \right) \tag{G10}$$

In jedem Schritt werden den Stellgrößen Gewichtungen $\underline{w}$ zugeordnet, wobei eine Gewichtung eine Bewertung in Kosten pro Einheit darstellt; ein Wert n ist die Anzahl der Optimierungsintervalle. Die entsprechenden Intervalle definieren die Aufteilung des Optimierungshorizonts, wobei größere Intervalle gegen Ende des Horizonts die Möglichkeit bieten, mit nur geringen Auswirkungen auf die Lösung die Größe des Optimierungsproblems und damit erforderliche Rechenzeit zu reduzieren. Außer der Beibehaltung der Beschränkungen der in den Gleichungen G1 und G2 gegebenen Stellgrößen $\underline{u}$ kann es auch Optimierungsbeschränkungen für den Zustandsvektor $\underline{x}$ oder für den Ausgangsvektor $\underline{y}$ geben. Mit diesen Beschränkungen wird der mit den Gleichungen G3 modellierten Physik des Systems G3 bei der Optimierungsrechnung getragen. Hier wird das Optimierungsproblem so formuliert, dass die Raumtemperatur $\vartheta_r$ in einem mit einer Gleichung G11 dargestellten Behaglichkeitsbereich bleibt.

$$\vartheta_{r,\min} \leq \vartheta_r \leq \vartheta_{r,\max} \tag{G11}$$

Da zur Lösung des Optimierungsproblems lineare Programmierung verwendet wird, werden die zukünftigen Zustände zur Berechnung der Matrizen $B_{ij}^*$ für die eingehenden Stellgrößen fixiert - beispielsweise auf den tatsächlichen Zustandsvektor - damit sich ein lineares Optimierungsproblem ergibt. Zum Auffinden einer optimalen Lösung für das nicht-lineare Problem kann eine iterative Prozedur angewendet werden, wobei die Lösung des Zustandsvektors für das lineare Problem verwendet wird, um die Matrizen $B_{ij}^*$ für den nächsten Iterationsschritt zu berechnen.

Das Optimierungsproblem wird wiederholt und mit einer Abtastzeit $t_s$ gelöst, die in der Regel sehr viel kürzer ist als die Länge des Optimierungshorizonts. Für einen gleitenden Horizont werden nach jeder Optimierung nur die optimierten Stellgrößen für die nächste Abtastzeit eingesetzt.

Im vorliegenden Beispiel werden in den Gleichungen G6 bis G9 Parameter auf Grundlage eines für die Schweiz typischen Bürogebäudes festgelegt. Die Messdaten zu Sonneneinstrahlung, Außenlufttemperatur und Aussenluftfeuchtkugeltemperatur werden für Zürich eingesetzt. Die internen Wärmegewinne werden für Werktage in der Zeit von 8.00 h bis 20.00 h auf 25 W/m² festgelegt, ansonsten gelten 5 W/m². Innerhalb des Optimierungshorizonts wird für jede Optimierung eine konstante Gewichtung w gemäss einer Gleichung G12 angewendet.

$$\underline{w}^T = \begin{bmatrix} 1 & 3 & -0.1 & 10 \end{bmatrix} \tag{G12}$$

Als Normalisierungsbasis für die Gewichtung dient eine Heizleistung von 1 kW. Für die Sonnenschutzposition wird eine negative Gewichtung gewählt, da ein geschlossener Sonnenschutz eine stärkere künstliche Beleuchtung erforderlich macht. Auf diese Weise wird künstliche Beleuchtung indirekt durch Kosten für einen geschlossenen Sonnenschutz behandelt. Maximale freie Kühlung verursacht Kosten, die äquivalent zu 10 kW Heizleistung sind.

Entscheidend für die Ausschöpfung des Energieeinsparungspotenzials und damit des Kosteneinsparungspotenzials der prädiktiven Regelung ist ein Vergleich zwischen idealer nicht-prädiktiver Regelung und idealer prädiktiver Regelung. Ideal bedeutet hier, dass ein modellgestützter prädiktiver Regler mit einem Modell zum Einsatz kommt, das dem geregelten Prozessmodell entspricht; die Störungen sind für jeden Optimierungshorizont genau bekannt. So ist der Hauptunterschied zwischen nicht-prädiktiver und prädiktiver Regelung durch die Länge des Optimierungshorizonts gegeben. Es werden die folgenden drei Regelstrategien erörtert:

Eine erste Strategie I, mit idealer prädiktiver Regelung mit einer Abtastzeit $t_s$ = 0,5 h und einer Länge des Optimierungshorizonts $t_{opt}$ = 72 h.

Eine zweite Strategie II, mit kurzzeitiger optimalen Regelung, mit einer Abtastzeit $t_s$ = 0,5 h und einer Länge des Optimierungshorizonts $t_{opt}$ = 0,5 h.

Ausserdem eine dritte Strategie III, als repräsentatives Beispiel für einen konventionellen Regelalgorithmus. Einerseits wird hier ein Sonnenschutz als Kühlgerät verwendet, was durch geschlossenen Sonnenschutz bei vorhandener Sonneneinstrahlung und geöffnetem Sonnenschutz bei fehlender Sonneneinstrahlung erreichbar ist, wenn die letzte aktive Aktion ein Kühlungsvorgang war, also $u_2$>0 oder $u_4$>0. Andrerseits wird der Sonnenschutz als Heizgerät verwendet; also geöffneter Sonnenschutz bei vorhandener Sonneneinstrahlung, geschlossener Sonnenschutz bei fehlender Sonneneinstrahlung, wenn die letzte aktive Aktion ein Heizungsvorgang war ($u_1$>0), freie Kühlung wird favorisiert, wenn $\vartheta_{oawb}$>15°C. Dies wurde hier approximiert, indem die Gewichtung für die Sonnenschutzposition auf 0,1 gesetzt wurde, wenn die letzte aktive Aktion ein Kühlungsvorgang war, und zurück auf minus 0, 1, wenn die letzte aktive Aktion ein Heizungsvorgang war. Außerdem wird die Gewichtung für die freie Kühlung auf minus 10 gesetzt, wenn die Aussenluftfeuchtkugeltemperatur $\vartheta_{oawb}$ >15°C und die Raumtemperatur $\vartheta_r$ > ($\vartheta_{r,min}$ + $\vartheta_{r,max}$)/2, andernfalls zurück auf 10, $t_s$ = 0,5 h und $t_{opt}$ = 0,5 h.

Die Energiekosten, die in ganzjährigen Simulationen für die drei Strategien aufgelaufen sind, wurden - entsprechend der Gewichtung in Gleichung G12, ohne dass allerdings die Sonnenschutzposition gewichtet worden wäre - bestimmt: Für erste Strategie I ergaben sich durchschnittliche Kosten von 6,44 · 10⁻³/m², die zweite Strategie II verursachte durchschnittliche Kosten von 13,6 · 10⁻³/m², und für die dritte Strategie III ergaben sich durchschnittliche Kosten von 9,19 · 10⁻³/m².

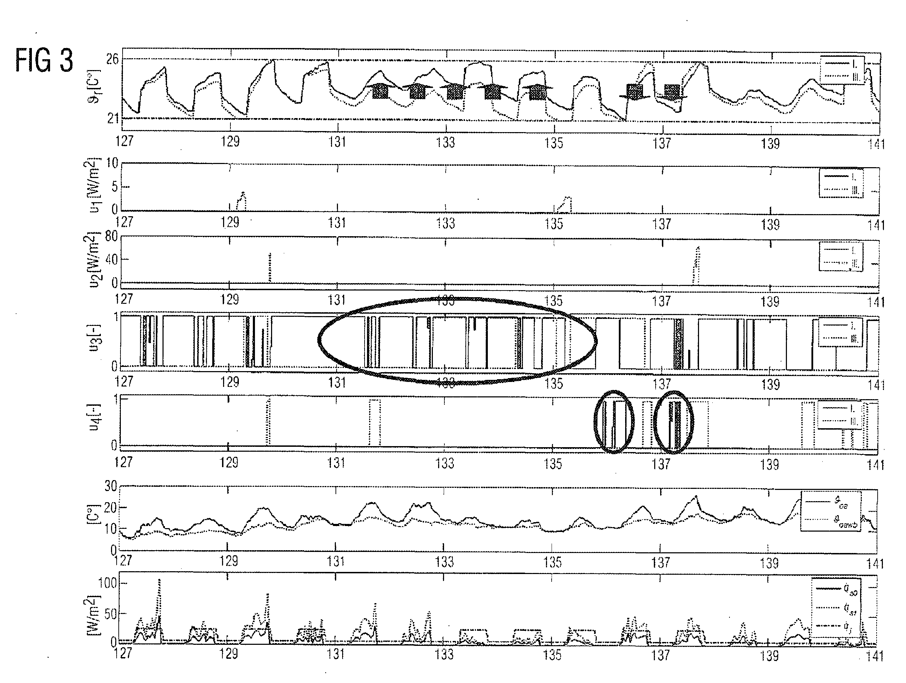

In Abbildung 3 wird ein Vergleich zwischen der prädiktiven dritten Strategie I und der nicht-prädiktiven dritten Strategie III für 14 Tage im Frühjahr gezeigt. Der prädiktiven Strategie I gelingt es, die Raumtemperatur lediglich mit kostengünstigen Heizungs- und Kühlungsquellen im Behaglichkeitsbereich zu halten. Damit wird die Raumtemperatur $\vartheta_r$ hoch gehalten, wenn die kommenden Tage kühler werden und, wie in den Tagen 131 bis 135, geringere solare Energiegewinne vorliegen, und die Raumtemperatur wird niedriger gehalten, wenn die nächsten Tage warm sind und, wie in den Tagen 136 und 137, hohe solare Energiegewinne wirksam werden. Auf diese Weise werden die Wärmekapazitäten des Gebäudes mit kostengünstiger Energie geleert und wieder aufgeladen.

Die dargelegten Ergebnisse zeigen, dass prädiktive integrierte Raumautomation über ein substanzielles verwertbares Potenzial verfügt. Die prädiktive Regellösung ist der nicht-prädiktiven insbesondere dann überlegen, wenn zum Kühlen und Heizen eines Gebäudes zu einem frühen Zeitpunkt , also bevor kostenintensive Heizung und Kühlung notwendig werden, kostengünstige Heizung und kostengünstige Kühlung verwendet werden können. Wenn schnelle, also kostenintensive Heiz- und Kühlgeräte vorhanden sind, wird die Behaglichkeit durch einen prädiktiven Regler vom vorgestellten Typ nicht beeinträchtigt - selbst wenn das Gebäudemodell des Reglers schlecht ist und die zukünftigen Störungen falsch abgeschätzt werden.

Bezugszeichenliste

Bezugszeichen

| 20 | Zone, erste |
| 21 | Zone, zweite |
| 22 | Zone, dritte |
| 24 | prädiktive Steuereinrichtung |
| 25 | Gebäudemodell |
| 26 | Mikrocomputer |
| 27 | Steuersignal, erstes |
| 30 | Ebene, obere |
| 31 | Ebene, untere |
| 32 | Regelgerät, erstes |
| 33 | Regelgerät, zweites |
| 34 | Regelgerät, drittes |
| 40, 41, 42 | Rückführungssignal |
| 43, 44, 45 | Steuersignal, zweites |
| 46, 47, 48 | Steuersignal, drittes |
| 49 | Sonnenschutzgerät |
| 50 | Kühlturm |
| 51, 52 | Lüftungsklappe |
| 53 | Heizwasserventil |
| 54 | Kühlwasserventil |
| 55 | Energierückgewinnungseinrichtung |
| 56, 57, 58 | Messgrösse |
| 60 | Modellteil, erster |
| 61 | Modellteil, zweiter |
| 62 | Modellteil, dritter |
| 63 | Raumknoten |

**Patentansprüche**

1. Anordnung mit wenigstens einer prädiktiven Steuereinrichtung zur Steuerung und Regelung einer Raumtemperatur ($\vartheta_r$) in einem Gebäude, **gekennzeichnet durch**
eine wenigstens zwei Ebenen aufweisende hierarchische Struktur, mit wenigstens einer in einer oberen Ebene(30) angeordneten prädiktiven Steuereinrichtung (24) zur optimalen Steuerung der Verwendung wenigstens einer freien Energiequelle (49; 50; 55), und mit wenigstens einer in einer der oberen Ebene (30) untergeordneten unteren Ebene (31) angeordneter Regeleinrichtung (32; 33; 34) zur rückgeführten Regelung wenigstens einer weiteren Energiequelle (49; 50; 51; 52; 53; 54; 55),
wobei - anstelle eines Sollwerts - ein mit einem unteren Wert ($\vartheta_{r,min}$) und einem oberen Wert ($\vartheta_{r,max}$) begrenztes Komforttemperaturband auswählbar ist, in welches die Raumtemperatur ($\vartheta_r$)eingeregelt wird, und,
wobei **durch** die in der oberen Ebene (30) angeordnete prädiktive Steuereinrichtung (24) ein Steuersignal (27) für die der prädiktiven Steuereinrichtung (24) untergeordnete Regeleinrichtung(32; 33; 34) generiert wird, und das Steuersignal (27) Information zur optimalen Nutzung der freien Energiequelle (49; 50; 55) aufweist.

2. Anordnung nach Anspruch 1, **dadurch gekennzeichnet,**
**dass** die auf der oberen Ebene (30) angeordnete prädiktive Steuereinrichtung (24) ein Gebäudemodell (25) aufweist, und
**dass** die Regelstrategie der prädiktiven Steuereinrichtung (24) sich eine im Gebäudemodell (25) zugeordnete Wärmekapazität ($C_{o1}$, $C_{02}$, $C_{o3}$, $C_{i1}$, $C_{i2}$, $C_{i3}$) eines passiven Wärmespeichers des Gebäudes nutzbar macht, indem der Wärmespeicher abhängig von einer Prognose durch freie Energiequellen geleert oder aufgeladen wird.

3. Anordnung nach Anspruch 1, **dadurch gekennzeichnet,**
**dass** das Komforttemperaturband ($\vartheta_{r,min}$, $\vartheta_{r,max}$) wenigstens zwei Kelvin umfasst.

4. Anordnung nach Anspruch 1, **dadurch gekennzeichnet,**
**dass** das Komforttemperaturband ($\vartheta_{r,min}$, $\vartheta_{r,max}$) wenigstens vier Kelvin umfasst.

5. Anordnung nach Anspruch 1, **dadurch gekennzeichnet,**
**dass** die prädiktive Steuereinrichtung (24) Mittel (25; 26) zur wiederholbaren Optimierung des Energieverbrauchs oder der Energiekosten aufweist.

6. Anordnung nach Anspruch 5, **dadurch gekennzeichnet,**
**dass** die Optimierung durch lineare Programmierung durchgeführt wird.

7. Anordnung nach Anspruch 1, **dadurch gekennzeichnet,**
**dass** die durch die in der oberen Ebene (30) angeordnete prädiktive Steuereinrichtung (24) eingesetzte freie Energiequelle Sonnenlicht (49), Abwärme (55), Aussenluft (51; 52), Seewasser (50) oder Erdreich ist.

8. Anordnung nach Anspruch 1, **dadurch gekennzeichnet,**
**dass** durch die in der oberen Ebene (30) angeordnete prädiktive Steuereinrichtung (24) ein Steuersignal (27) für wenigstens ein Sonnenschutzgerät (49) berechnet und an die in der untergeordneten Ebene (31) angeordnete Regeleinrichtung (32) zur rückgeführten Regelung übertragen wird.

9. Anordnung nach Anspruch 1, **dadurch gekennzeichnet,**
**dass** durch die in der oberen Ebene (30) angeordnete prädiktive Steuereinrichtung (24) ein Steuersignal (27) für wenigstens eine Energierückgewinnungseinrichtung (55) berechnet und an die in der untergeordneten Ebene (31) angeordnete Regeleinrichtung (34) zur rückgeführten Regelung übertragen wird.

10. Anordnung nach Anspruch 1, **dadurch gekennzeichnet,**
**dass** durch die in der oberen Ebene (30) angeordnete prädiktive Steuereinrichtung (24) ein Steuersignal (27) für wenigstens einen Kühlturm (50) berechnet und an die in der untergeordneten Ebene (31) angeordnete Regeleinrichtung (32) zur rückgeführten Regelung übertragen wird.

11. Anordnung nach Anspruch 1, **dadurch gekennzeichnet,**
**dass** durch die in der oberen Ebene (30) angeordnete prädiktive Steuereinrichtung (24) ein Steuersignal (27) für wenigstens eine Luftklappe (51; 52) berechnet und an die in der untergeordneten Ebene (31) angeordnete Regeleinrichtung (32) zur rückgeführten Regelung übertragen wird.

12. Anordnung nach Anspruch 1, **dadurch gekennzeichnet,**
**dass** durch die in der unteren Ebene (31) angeordnete Regeleinrichtung (32; 33; 34) freie Energiequellen steuernde Geräte (49; 50; 51; 52; 55) und / oder kostenintensive Energiequellen steuernde Geräte (53; 54) gesteuert werden.

**Claims**

1. Arrangement with a hierarchical structure having at least two levels for controlling and regulating a room temperature ($\vartheta r$) in a building, comprising at least one predictive control device (24), arranged at an upper level (30), for optimum control of the use of at least one free energy source (49; 50; 55), and comprising at least one regulating device (32; 33; 34), arranged at a lower level (31) subordinate to the upper level (30), for feedback regulation of at least one further energy source (49; 50; 51; 52; 53; 54; 55),

wherein - instead of a desired value - it is possible to select a comfort temperature band that is delimited by a lower value ($\vartheta_{r,min}$) and an upper value ($\vartheta_{r,max}$) and into which the room temperature ($\vartheta r$) is regulated, and, wherein the predictive control device (24) arranged at the upper level (30) generates a control signal (27) for the regulating device (32; 33; 34) subordinate to the predictive control device (24), and the control signal (27) has information relating to the optimum use of the free energy source (49; 50; 55).

2. Arrangement according to Claim 1, **characterized in that** the predictive control device (24) arranged on the upper level (30) had a building model (25), and **in that** the regulation strategy of the predictive control device (24) utilizes a heat capacity ($C_{01}$, $C_{02}$, $C_{03}$, $C_{i1}$, $C_{i2}$, $C_{i3}$) of a passive heat accumulator of the building, which heat capacity is assigned in the building model (25), by virtue of the heat accumulator being emptied or charged by free energy sources depending on a prediction.

3. Arrangement according to Claim 1, **characterized in that** the comfort temperature band ($\vartheta r_{,min}$, $\vartheta_{r,max}$) spans at least two kelvins.

4. Arrangement according to Claim 1, **characterized in that** the comfort temperature band ($\vartheta r_{,min}$, $\vartheta_{r,max}$) spans at least four kelvins.

5. Arrangement according to Claim 1, **characterized in that** the predictive control device (24) has means (25; 26) for repeated optimization of energy consumption or the energy costs.

6. Arrangement according to Claim 5, **characterized in that** the optimization is carried out by linear programming.

7. Arrangement according to Claim 1, **characterized in that** the free energy source used by the predictive control device (24) arranged at the upper level (30) is sunlight (49), waste heat (55), outside air (51; 52), sea water (50) or the ground.

8. Arrangement according to Claim 1, **characterized in that** the predictive control device (24) arranged at the upper level (30) calculates a control signal (27) for at least one solar protection device (49), and said control signal is transmitted to the regulating device (32) for feedback regulation arranged at the subordinate level (31).

9. Arrangement according to Claim 1, **characterized in that** the predictive control device (24) arranged at the upper level (30) calculates a control signal (27) for at least one energy recovery device (55), and said control signal is transmitted to the regulating device (34) for feedback regulation arranged at the subordinate level (31).

10. Arrangement according to Claim 1, **characterized in that** the predictive control device (24) arranged at the upper level (30) calculates a control signal (27) for at least one cooling tower (50), and said control signal is transmitted to the regulating device (32) for feedback regulation arranged at the subordinate level (31).

11. Arrangement according to Claim 1, **characterized in that** the predictive control device (24) arranged at the upper level (30) calculates a control signal (27) for at least one air damper (51; 52), and said control signal is transmitted to the regulating device (32) for feedback regulation arranged at the subordinate level (31).

12. Arrangement according to Claim 1, **characterized in that** the regulating device (32; 33; 34) arranged at the lower level (31) controls equipment (49; 50; 51; 52; 55) controlling free energy resources and/or equipment (53; 54) controlling cost intensive energy sources.

**Revendications**

1. Agencement comprenant au moins un dispositif de commande prédictive pour la commande et la régulation d'une température ambiante ($\vartheta_r$) dans un bâtiment, **caractérisé par**
une structure hiérarchique présentant au moins deux niveaux, avec au moins un dispositif de commande prédictive (24) monté dans un niveau supérieur (30), pour assurer une commande optimale de l'utilisation d'au moins une source d'énergie libre (49; 50; 55), et avec au moins un dispositif de régulation (32; 33; 34) monté dans un niveau inférieur (31) subordonné au niveau supérieur (30), pour assurer une régulation par rétroaction d'au moins une autre source d'énergie (49; 50; 51; 52; 53; 54; 55),
dans lequel on peut sélectionner, à la place d'une valeur de consigne, une bande de température de confort limitée par une valeur basse ($\vartheta_{r,min}$) et une valeur haute ($\vartheta_{r,max}$), bande à l'intérieur de laquelle on règle la température ambiante ($\vartheta r$), et

dans lequel le dispositif de commande prédictive (24) monté dans le niveau supérieur (30) génère un signal de commande (27) pour le dispositif de régulation (32; 33; 34) subordonné au dispositif de commande prédictive (24), ledit signal de commande (27) comportant de l'information pour l'utilisation optimale de la source d'énergie libre (49; 50; 55).

2. Agencement selon la revendication 1, **caractérisé**
**en ce que** le dispositif de commande prédictive (24) monté dans le niveau supérieur (30) comporte un modèle de bâtiment (25), et
**en ce que** la stratégie de régulation du dispositif de commande prédictive (24) utilise une capacité calorifique ($C_{01}$, $C_{02}$, $C_{03}$, $C_{i1}$, $C_{i2}$, $C_{i3}$), associée dans le modèle de bâtiment (25), d'un accumulateur de chaleur passif du bâtiment, en faisant vider ou recharger l'accumulateur de chaleur par des sources d'énergies libres en fonction d'une prévision.

3. Agencement selon la revendication 1, **caractérisé**
**en ce que** la bande de température de confort ($\vartheta_{r,min}$, $\vartheta_{r,max}$) comprend au moins deux kelvins.

4. Agencement selon la revendication 1, **caractérisé**
**en ce que** la bande de température de confort ($\vartheta_{r,min}$, $\vartheta_{r,max}$) comprend au moins quatre kelvins.

5. Agencement selon la revendication 1, **caractérisé**
**en ce que** le dispositif de commande prédictive (24) comporte des moyens (25; 26) d'optimisation reproductible de la consommation d'énergie ou des dépenses d'énergie.

6. Agencement selon la revendication 5, **caractérisé**
**en ce que** l'optimisation s'effectue par programmation linéaire.

7. Agencement selon la revendication 1, **caractérisé**
**en ce que** la source d'énergie libre utilisée par le dispositif de commande prédictive (24) monté dans le niveau supérieur (30) est la lumière du soleil (49), la chaleur perdue (55), l'air extérieur (51; 52), l'eau de mer (50) ou le sol.

8. Agencement selon la revendication 1, **caractérisé**
**en ce que** le dispositif de commande prédictive (24) monté dans le niveau supérieur (30) calcule un signal de commande (27) pour au moins un appareil de protection solaire (49) et transmet celui-ci au dispositif de régulation (32) monté dans le niveau subordonné (31), pour la régulation par rétroaction.

9. Agencement selon la revendication 1, **caractérisé**
**en ce que** le dispositif de commande prédictive (24) monté dans le niveau supérieur (30) calcule un signal de commande (27) pour au moins un dispositif de récupération d'énergie (55) et transmet celui-ci au dispositif de régulation (34) monté dans le niveau subordonné (31), pour la régulation par rétroaction.

10. Agencement selon la revendication 1, **caractérisé**
**en ce que** le dispositif de commande prédictive (24) monté dans le niveau supérieur (30) calcule un signal de commande (27) pour au moins une tour de refroidissement (50) et transmet celui-ci au dispositif de régulation (32) monté dans le niveau subordonné (31), pour la régulation par rétroaction.

11. Agencement selon la revendication 1, **caractérisé**
**en ce que** le dispositif de commande prédictive (24) monté dans le niveau supérieur (30) calcule un signal de commande (27) pour au moins un volet d'aération (51; 52) et transmet celui-ci au dispositif de régulation (32) monté dans le niveau subordonné (31), pour la régulation par rétroaction.

12. Agencement selon la revendication 1, **caractérisé**
**en ce que** le dispositif de régulation (32; 33; 34) monté dans le niveau inférieur (31) commande des appareils (49; 50; 51; 52; 55) commandant des sources d'énergies libres et/ou des appareils (53; 54) commandant des sources d'énergies coûteuses.

FIG 1

EP 1 934 665 B1

FIG 2

EP 1 934 665 B1

FIG 3

EP 1 934 665 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9427202 A
- EP 1074900 A